# FASCICULE DE BREVET EUROPEEN

(11) **EP 2 162 110 B1**
(45) Date de publication et mention de la délivrance du brevet: **14.11.2012**
(21) Numéro de dépôt: 07866230.1
(22) Date de dépôt: 03.12.2007
(51) Int. Cl.: A61J 3/00, B65G 45/00

(54) **Dispositif de dépoussiérage de comprimés ou gélules pharmaceutiques**
Vorrichtung zur Entfernung von Staub von pharmazeutischen Tabletten oder Kapseln
Device for removing dust from pharmaceutical tablets or capsules

(30) Priorité: 20.06.2007 WO PCT/EP2007/005411
(43) Date de publication de la demande: 17.03.2010
(73) Titulaire: Pharma Technology S.A., 1400 Nivelles (BE)
(72) Inventeur: DOLLINGER, Martial, B-1420 Braine l'Alleud (BE)
(74) Mandataire: Mille, Eric
(86) Numéro de dépôt international: PCT/EP2007/010491
(87) Numéro de publication internationale: WO 2008/154948

(56) Documents cités:
- EP-A- 0 549 533
- WO-A-02/28751
- DE-U1- 9 416 619
- GB-A- 1 158 831
- US-A- 2 918 691

## Description

La présente invention concerne un dispositif de dépoussiérage de comprimés ou gélules pharmaceutiques. De tels dispositifs sont utilisés dans l'industrie pharmaceutique pour débarrasser des comprimés ou gélules de la poudre de médicament indésirable qui les recouvre après leur fabrication par compression ou encapsulation de cette poudre. Le dispositif de dépoussiérage est donc disposé dans la chaîne de production de ces comprimés ou gélules, entre les dispositifs de fabrication par compression ou encapsulation de poudre de médicament et un dispositif de conditionnement de ces comprimés ou gélules après dépoussiérage.

Un dispositif de dépoussiérage selon l'état de la technique comprend une colonne de dépoussiérage généralement en acier inoxydable, comprenant une rampe de convoyage de comprimés ou gélules pharmaceutiques à forme d'hélicoïde réglé enroulée autour d'un élément cylindrique central. La rampe comprend une base, une bordure intérieure par laquelle elle est fixée à l'élément cylindrique central généralement par soudage en continu ou par points depuis la base jusqu'au sommet de cet élément et une bordure périphérique. Ce dernier délimite avec l'élément cylindrique central un chenal de convoyage des comprimés ou gélules. La colonne comprend à sa base une entrée d'alimentation du chenal en comprimés ou gélules et à son sommet une sortie de décharge de ces comprimés ou gélules du chenal. Cette colonne est agencée pour être fixée par sa base, par exemple au moyen d'écrous, à un bloc moteur comprenant un moteur, par exemple un moteur électromagnétique oscillant, qui lorsqu'il est enclenché anime la colonne d'un mouvement vibratoire qui entraîne les comprimés ou gélules de sa base à son sommet, dans le chenal délimité par la rampe de convoyage. Des fentes sont agencées à intervalles réguliers dans l'élément cylindrique central de la colonne, de manière adjacente à la base de la rampe et cet élément cylindrique central est mis en dépression par un moyen d'aspiration de sorte que la poussière pulvérulente recouvrant les comprimés ou gélules est aspirée par lesdites fentes au travers de l'élément cylindrique central et ainsi évacuée du dispositif. Alternativement, la base de la rampe est percée radialement d'orifices de diamètre inférieur à celui des comprimés ou gélules à dépoussiérer, disposés au droit des fentes dont question, lesquelles sont agencées sous cette base. Des coupelles sont dans cette configuration placées sous les orifices, entre la base de la rampe et chaque fente de l'élément cylindrique central, de manière à aspirer la poussière pulvérulente des comprimés ou gélules par lesdits orifices et à la guider au travers des fentes vers l'intérieur de l'élément cylindrique central pour l'évacuer du dispositif. La colonne est recouverte d'une enceinte tubulaire fermée à son sommet, généralement en acier inoxydable ou matière plastique, dont le diamètre intérieur est supérieur au diamètre extérieur de la colonne de dépoussiérage et qui est fixée de manière amovible au bloc moteur de la colonne, par exemple au moyens d'écrous ou de clips, de sorte à délimiter un espace de confinement autour de ladite colonne pour éviter que des comprimés ou gélules ne s'échappent du dispositif et que de la poussière de médicament ne se répande dans le milieu ambiant. En effet, dans un tel dispositif, la rampe de convoyage n'est pas étanche aux comprimés ou gélules qui peuvent s'en échapper en rebondissant lors de leur convoyage au dessus de la bordure périphérique de ladite rampe, qui dès lors n'est pas constitutive, ne fait pas partie, d'une conduite de convoyage dons les parois seraient étanches auxdits comprimés ou gélules. Le moyen d'aspiration de la poussière des comprimés ou gélules peut également être disposé à l'intérieur de l'enceinte, entre cette dernière et la colonne, notamment à la base de celle-ci, de sorte que l'aspiration se fait par dépression de l'espace intérieur de cette enceinte.

Un tel dispositif traditionnel présente plusieurs inconvénients. Tout d'abord, il est complexe à réaliser puisqu'il demande la soudure de la rampe de convoyage à un élément cylindrique central, ce qui est une opération longue et délicate à effectuer. Il demande également qu'une enceinte de confinement de la colonne soit prévue pour l'isoler du milieu ambiant, laquelle enceinte étant un élément extérieur à la colonne elle-même, qui ne lui est pas solidaire de sorte qu'une telle colonne traditionnelle ne peut être détachée du bloc moteur du dispositif de dépoussiérage sans ôter auparavant l'enceinte en question, exposant ainsi au milieu ambiant les comprimés ou gélules et/ou leurs poussières encore présents dans la colonne si celle-ci n'a pas auparavant été nettoyée.

D'autre part, l'élément cylindrique central d'un tel dispositif a un diamètre pouvant dépasser un quart de celui de la colonne de dépoussiérage, ce diamètre étant conditionné à la fois par l'efficacité d'aspiration par cet élément cylindrique à atteindre pour obtenir un dépoussiérage suffisant des comprimés ou gélules convoyés et par la rigidité de la colonne à obtenir pour garantir la solidité du dispositif. Or, pour un diamètre fixé de la colonne, celui de l'élément cylindrique central réduit d'autant la capacité de dépoussiérage de cette dernière. Cette capacité est également limitée par la hauteur de la bordure périphérique de la rampe de convoyage. En effet, l'épaisseur de la couche de comprimés ou gélules pouvant être convoyée et dépoussiérée dans le dispositif doit être inférieure à la hauteur en question, faute de quoi, des comprimés ou gélules déborderaient de la rampe pour s'accumuler à la base de la colonne et ne seraient alors pas dépoussiérés.

Lors du convoyage des comprimés ou gélules le long de la rampe de la colonne et malgré l'aspiration de la poussière pulvérulente qui les recouvre par les fentes de l'élément cylindrique central de cette colonne, de la poussière vient se déposer sur les surfaces de la colonne et la face intérieure de son enceinte. Au bout d'un certain temps, l'accumulation de cette poussière est excessive et il est nécessaire d'en débarrasser les surfaces qu'elle recouvre par nettoyage de ces dernières. Ceci est également nécessaire lorsque des comprimés ou gélules de composition différente de ceux convoyés précédemment dans le dispositif doivent y être introduits pour dépoussiérage, afin d'éviter la contamination de ces comprimés ou gélules par de la poussière pulvérulente de composition différente. Ce nettoyage peut être effectué à la main, en retirant l'enceinte du dispositif et en nettoyant l'intérieur ainsi que la colonne, par exemple au moyen d'un chiffon doux, si nécessaire imbibé d'un produit de nettoyage approprié. Un tel nettoyage est long, notamment en raison du fait qu'il impose le démontage de l'enveloppe du dispositif, fastidieux et parfois imparfait. Il est éventuellement possible de remplacer la colonne et l'enceinte à nettoyer par une colonne et une enceinte propres dans le dispositif lorsqu'on souhaite passer du dépoussiérage de comprimés ou gélules d'une certaine composition à celui de comprimés ou gélules d'une autre composition, de sorte à ne pas interrompre la chaîne de production/dépoussiérage/conditionnement pendant toute la durée de nettoyage d'une telle colonne et enceinte. Cependant, le retrait de l'enceinte du dispositif pour en démonter la colonne et le démontage de cette dernière cause inévitablement la diffusion de poussière pulvérulente dans l'atmosphère et sur le bloc moteur du dispositif, laquelle entraîne un risque de contamination par cette poussière des comprimés ou gélules d'une autre composition à traiter dans la colonne et enceinte propres substituées à celles à nettoyer.

Pour tenter de pallier ces inconvénients liés au nettoyage manuel d'un tel dispositif de dépoussiérage, il a été proposé dans l'état de la technique de pourvoir le dispositif en question d'un système d'auto nettoyage. Par exemple, selon le brevet EP1322533 B1 (WOØ2/28751), le dispositif est muni de sprinklers projetant de l'eau sous pression additionnée de détergent dans l'espace de confinement de la colonne délimité par l'enceinte du dispositif, soit depuis l'intérieur de son élément cylindrique central par des orifices appropriés pratiqués dans celui-ce, soit depuis l'extérieur de son enceinte par de tels orifices, et de munir le dispositif d'un collecteur agencé pour évacuer cette eau dudit dispositif. Pour sécher l'intérieur du dispositif après nettoyage, le brevet en question prévoit également d'y raccorder une source d'air chaud sous pression ou une pompe à vide.

Bien qu'un tel dispositif autonettoyant constitue un progrès par rapport au nettoyage manuel d'un dispositif de dépoussiérage de comprimés ou gélules pharmaceutiques classique, il n'en élimine pas les inconvénients autres que ceux liés à la difficulté de son nettoyage et même à ce niveau, n'apporte pas une solution optimale au problème de son nettoyage.

En effet, le système de nettoyage proposé par le brevet dont question est relativement complexe en ce qu'il se compose d'un réseau de sprinklers répartis dans ou autour de la colonne du dispositif de nettoyage. Ensuite, le nettoyage obtenu n'est pas parfait en ce que l'efficacité de nettoyage par les jets d'eau projetés par les sprinklers varie selon la position des zones du dispositif atteintes par lesdits jets relativement à leur orifice d'émission. En particulier, une rainure est généralement présente entre la bordure intérieure de la rampe de convoyage et l'élément cylindrique central de la colonne à laquelle cette bordure est fixée et de la poussière pulvérulente a tendance à s'accumuler dans cette rainure, laquelle est particulièrement difficile à nettoyer parfaitement par les jets d'eau des sprinklers. En fait, pour obtenir un nettoyage parfait, de la colonne, il est nécessaire de démonter l'enceinte qui l'enveloppe et de terminer le nettoyage à la main. Dès lors, l'inconvénient d'un tel nettoyage à la main n'est pas totalement éliminé par le dispositif autonettoyant proposé.

Les inconvénients d'un dispositif de dépoussiérage selon l'état de la technique sont palliés par le dispositif selon l'invention, lequel comprend une colonne de dépoussiérage comprenant une première rampe de convoyage à forme d'hélicoïde réglé ladite rampe comprenant une première base ayant une face antérieure et une face postérieure, une première bordure périphérique et une première bordure intérieure, ladite première rampe est constitutive d'une conduite de convoyage aux parois étanches aux comprimés ou gélules comportant une entrée en partie inférieure de la colonne et une sortie en partie supérieure de la colonne et cette colonne comprend une chambre d'aspiration de poussières de comprimés ou gélules aux parois étanches aux comprimés ou gélules convoyés, dont une première paroi est constituée d'une desdites première bordure périphérique ou intérieure ou de ladite première base de la rampe de convoyage et un passage d'aspiration de poussières de comprimés ou gélules est prévu dans ladite première paroi entre la conduite de convoyage et la chambre d'aspiration, l'ensemble formé par la conduite de convoyage et la chambre d'aspiration étant agencé de sorte que la colonne soit étanche aux poussières de comprimés ou gélules.

Grâce au fait que le dispositif de dépoussiérage selon l'invention comprend une conduite de convoyage et une chambre d'aspiration aux parois étanches aux comprimés ou gélules, dont l'ensemble est agencé de sorte que la colonne soit étanche aux poussières de comprimés ou gélules, plus aucun comprimé ne peut déborder de la conduite de convoyage, ce qui en augmente sensiblement la capacité, et aucune poussière ne peut se répandre à l'extérieur de la colonne, contrairement aux dispositifs selon l'état de la technique. De plus, la structure du dispositif selon l'invention est beaucoup plus simple que celle d'un dispositif selon l'état de la technique en ce qu'elle ne demande pas d'entourer la colonne de dépoussiérage d'une enceinte de confinement séparée, le confinement étant en effet assuré par l'agencement des conduite de convoyage et chambre d'aspiration elles-mêmes. La rampe de convoyage ne doit pas non plus être fixée, généralement par soudage, à un élément cylindrique central dès lors que c'est la bordure intérieure de chaque rampe qui délimite un volume cylindrique central dans le dispositif selon l'invention. De plus, cet élément cylindrique central ne devant plus obligatoirement servir à aspirer la poussière pulvérulente des comprimés ou gélules convoyés comme dans un dispositif selon l'état de la technique, le diamètre dudit élément n'est pas nécessairement conditionné par l'efficacité d'aspiration à atteindre pour obtenir un dépoussiérage suffisant des comprimés ou gélules convoyés et peut dès lors être sensiblement réduit relativement à celui de l'élément cylindrique central d'un dispositif selon l'état de la technique, augmentant d'autant la capacité de traitement de comprimés ou gélules du dispositif selon l'invention.

Un premier et un second modes de réalisation non limitatifs de la portée de l'invention vont à présent être décrits plus en détails, en référence aux figures suivantes, dans lesquelles :
La figure 1a représente une vue schématique d'un premier mode de réalisation d'un dispositif selon l'invention ;
La figure 1b représente une vue en coupe verticale du dispositif illustré à la figure 1 a ;
La figure 2 représente une vue en perspective du dispositif illustré à la figure 1a montré ouvert pour en illustrer les sections superposées alternativement d'une rampe de convoyage et d'une rampe d'aspiration ;
La figure 3a représente une vue du dessus d'une section de rampe de convoyage représentée à la figure 2 ;
La figure 3b représente une vue en coupe transversale de la section de rampe de convoyage représentée à la figure 3a ;
La figure 4a représente une vue du dessus d'une section de rampe d'aspiration représentée à la figure 2;
La figure 4b représente une vue en coupe transversale de la section de rampe d'aspiration représentée à la figure 4a.
La figure 5a représente une vue schématique d'un second mode de réalisation d'un dispositif selon l'invention ;
La figure 5b représente une vue en coupe verticale du dispositif illustré à la figure 5a;
La figure 6 représente une vue en perspective du dispositif illustré à la figure 5a montré ouvert pour en illustrer les sections de colonne superposées;
La figure 7a représente une vue du dessus d'une section de colonne représentée à la figure 6;
La figure 7b représente une vue en coupe transversale de la section de colonne représentée à la figure 7a;

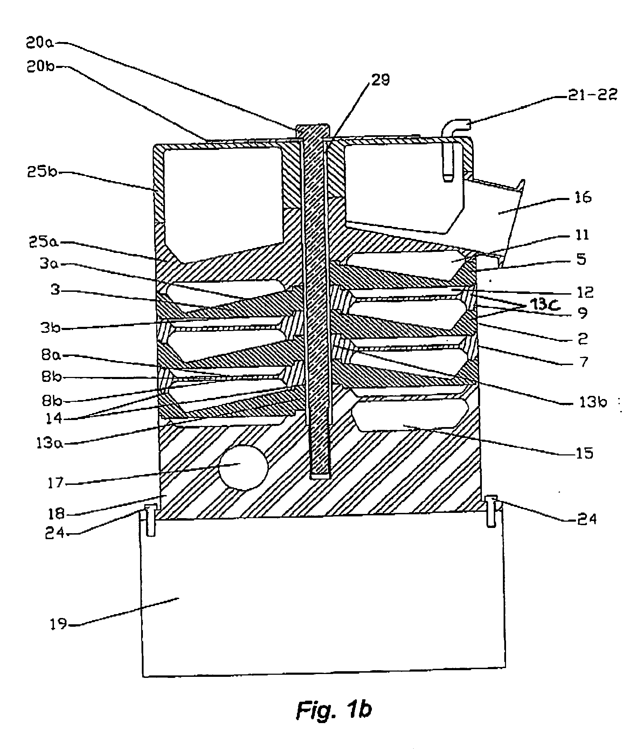

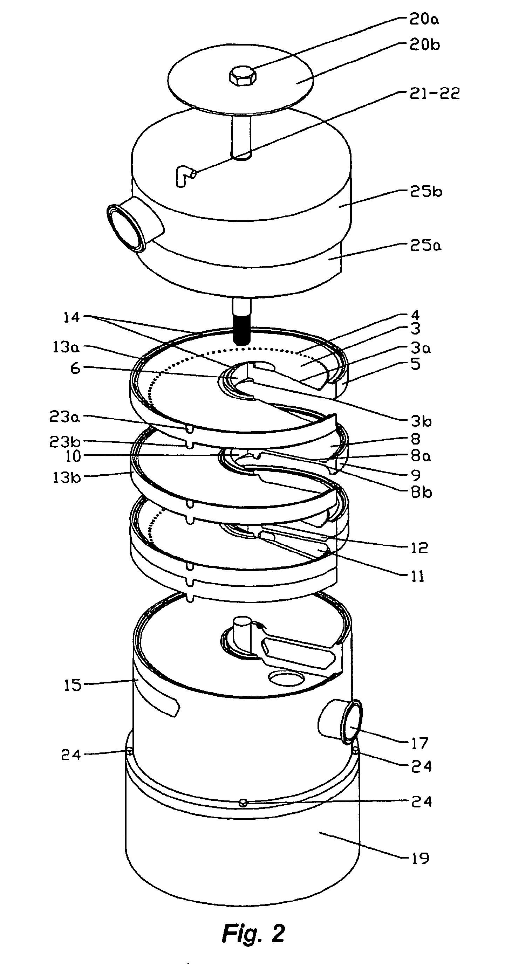

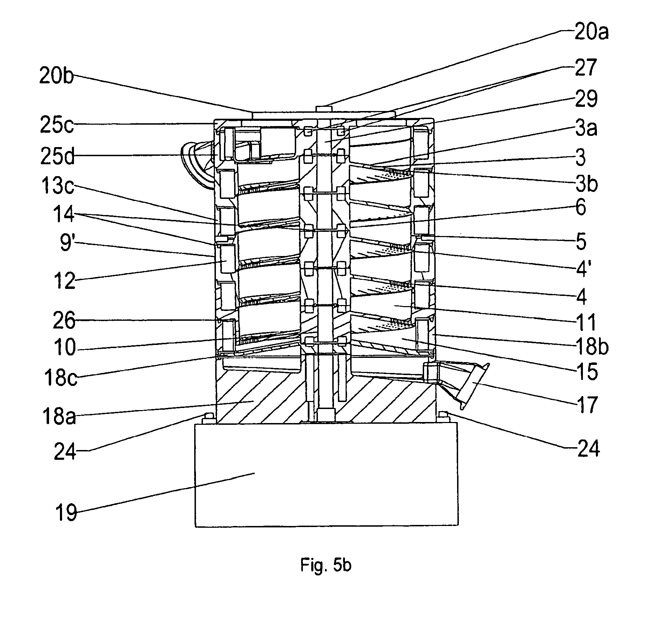

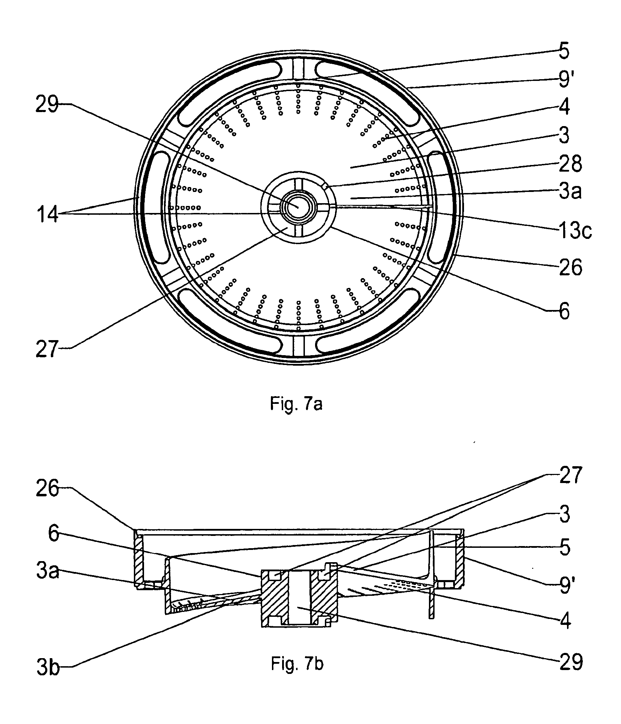

Dans chacun des deux modes de réalisation de l'invention illustrés, le dispositif de dépoussiérage de comprimés ou gélules comprend une colonne 1 de dépoussiérage comprenant une première rampe 2 de convoyage à forme d'hélicoïde réglé, ladite rampe comprenant une première base 3 ayant une face antérieure 3a et une face postérieure 3b, laquelle base est percée d'orifices d'aspiration 4, une première bordure périphérique 5 et une première bordure intérieure 6. Le profil de la base de la rampe de convoyage peut être en « V » comme représenté à la figure 1b ainsi qu'à la figure 2 ou en « W » ou encore avoir toute autre forme souhaitable pour un convoyage et un dépoussiérage optimaux des comprimés ou gélules traités dans le dispositif. De même, la forme, le nombre et la disposition des orifices d'aspiration peuvent être choisis de manière à optimiser l'efficacité d'aspiration. Ces orifices peuvent par exemple être de forme circulaire et agencés dans une base de profil en « V » de la rampe de convoyage ainsi que représenté aux figures 1b, 2, 3a et 3b ainsi qu'aux figures 5b, 6, 7a et 7b mais pourraient également être par exemple de forme oblongue et/ou répartis de manière plus homogène au travers de la surface de ladite base. L'état de cette surface peut aussi être choisi de sorte à optimiser le convoyage et le dépoussiérage des comprimés ou gélules traités dans le dispositif. Il peut par exemple être lisse mais aussi rugueux ou présenter un motif en relief tel que par exemple un gaufrage.

Dans le premier mode de réalisation illustré, le dispositif comprend également une seconde rampe d'aspiration 7 à forme d'hélicoïde réglé, dont le diamètre et la distance de la génératrice à l'axe, commun à celui de la première rampe, sont sensiblement égaux à ceux de la première rampe et agencée parallèlement à cette dernière sous celle-ci, de sorte à former avec elle une double hélice, ladite seconde rampe comprenant une seconde base 8 ayant une face antérieure 8a et une face postérieure 8b, une seconde bordure périphérique 9 et une seconde bordure intérieure 10. Les hauteurs respectives des première et seconde bordures périphériques et des première et seconde bordures intérieures des rampes sont complémentaires, de sorte à délimiter entre la face antérieur de la base de la rampe de convoyage, la face postérieure de la base de la rampe d'aspiration et leurs bordures respectives une conduite 11 de convoyage et entre la face antérieure de la base de la rampe d'aspiration, la face postérieure de la base de la rampe de convoyage et leurs bordures respectives une chambre 12 d'aspiration. Dans ce mode de réalisation, le seul passage d'aspiration existant entre la conduite de convoyage et la chambre d'aspiration est constitué des orifices d'aspiration 4.

Dans le second mode de réalisation illustré, aucune seconde rampe d'aspiration n'est prévue et les hauteurs respectives de la première bordure intérieure et de la première bordure périphérique de la rampe de convoyage correspondent sensiblement à la hauteur de translation de l'hélicoïde dont cette première rampe de convoyage emprunte la forme de sorte que la conduite de convoyage est délimitée par ces bordures et par la face antérieure de la base de la rampe de convoyage et la face postérieure de cette base sous-jacente à ladite face antérieure. Dans ce mode de réalisation, la chambre d'aspiration est délimitée par la première bordure périphérique et une bordure périphérique extérieure 9', coaxiale à la première bordure périphérique et de hauteur correspondant sensiblement à la hauteur de translation de l'hélicoïde dont la première rampe de convoyage emprunte la forme, la bordure périphérique extérieure étant disposée du côté opposé la première bordure périphérique relativement à la première bordure intérieure et connectée à cette première bordure périphérique par des moyens de connexion 26. Dans le même mode de réalisation, le passage d'aspiration entre la conduite de convoyage et la chambre d'aspiration comprend non seulement des orifices 4 percés dans la base de la rampe de convoyage mais également une fente 4' disposée au droit de la première bordure périphérique. En complément ou alternativement à ladite fente, des orifices (non représentés) percés dans la première bordure périphérique peuvent également être prévus. Il est à remarquer que dans ce second mode de réalisation du dispositif selon l'invention, les orifices susmentionnés percés dans le base de la rampe de convoyage sont optionnels.

Dans chacun des modes de réalisation du dispositif selon l'invention illustrés, la conduite de convoyage comporte une entrée en partie inférieure de la colonne et une sortie en partie supérieure de la colonne et de préférence, cette dernière est réalisée en un matériau synthétique, comme un plastic ou une résine, plutôt que comme selon l'état de la technique, en acier inoxydable. L'utilisation d'un matériau synthétique offre plusieurs avantages. Tout d'abord, un tel matériau est plus facile à mouler ou à usiner pour réaliser une pièce que l'acier, spécialement l'acier inoxydable. Il est également généralement plus léger que l'acier et engendre moins de bruits lors du fonctionnement du dispositif.

Dans chacun des modes de réalisation en question, chaque rampe est a forme d'hélicoïde normal et le dispositif comprend encore un moyen d'alimentation 15 de la conduite de convoyage de la colonne en comprimés ou gélules agencé à la base de la rampe de convoyage, un moyen d'évacuation 16 des comprimés ou gélules convoyés agencé au sommet de la rampe de convoyage, un conduit d'aspiration 17 de poussières connecté à la chambre d'aspiration et un bloc moteur 19 agencé pour animer la colonne d'un mouvement oscillant pour convoyer les comprimés ou gélules de la base au sommet de la rampe de convoyage.

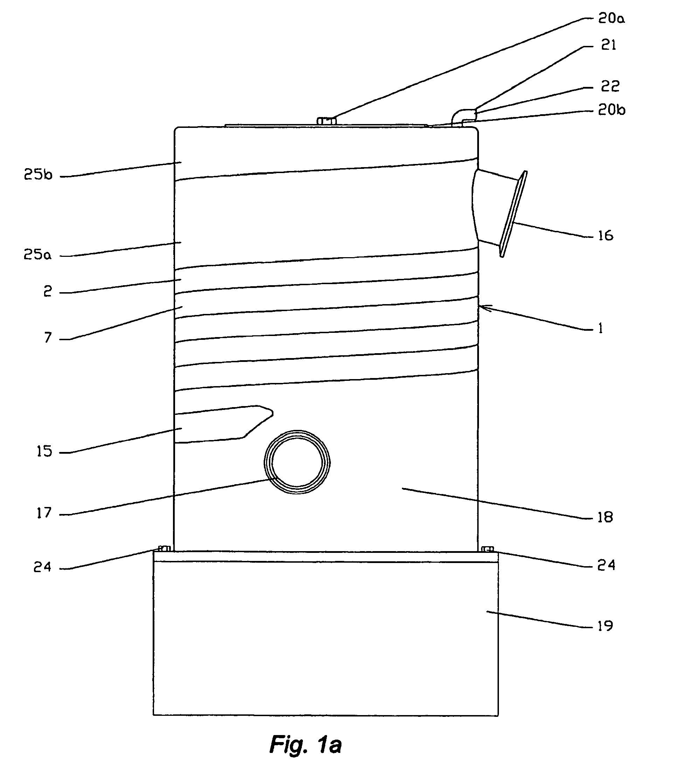

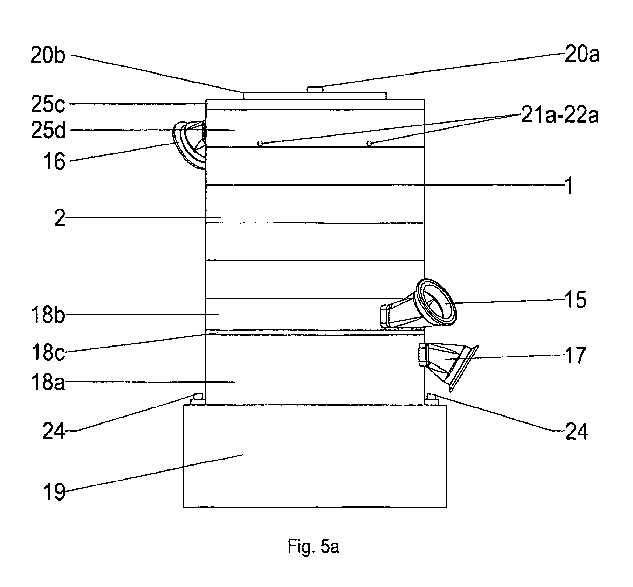

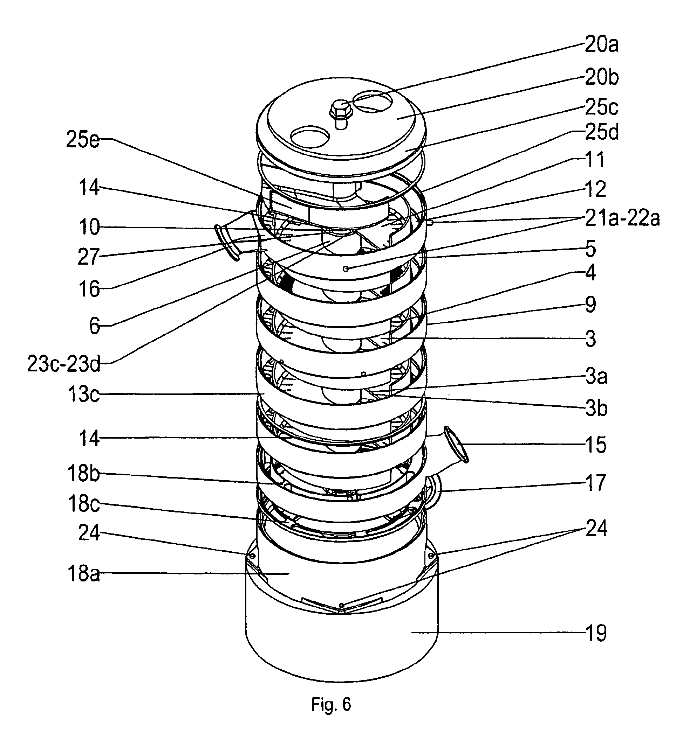

Dans chaque mode de réalisation illustré, la colonne comprend en outre une coiffe, généralement composée pour des raisons d'usinage de plusieurs éléments complémentaires 25a, 25b (figures 1 a, 1 b et 2) ou 25c, 25d, 25e (figures 5a, 5b et 6). La coiffe est agencée pour être emboîtée de façon étanche sur l'ensemble formé par la conduite de convoyage et la chambre d'aspiration ainsi qu'un socle monobloc 18 (figures 1a, 1b et 2) ou en plusieurs éléments 18a, 18b, 18c (figures 5a, 5b, 6), agencé pour être emboîté de façon étanche sous cet ensemble, ainsi qu'un premier moyen de fixation amovible 20 de ladite coiffe audit socle, agencé pour compresser entre eux ledit ensemble, de même qu'un second moyen de fixation amovible 24 de la colonne au bloc moteur, constitué par exemple de vis 24. La coiffe de la colonne comprend, le moyen d'évacuation des comprimés de la colonne et son socle comprend le moyen d'alimentation en comprimés de cette dernière ainsi que le conduit d'aspiration. Le premier moyen de fixation comprend une vis 20a agencée pour traverser sensiblement axialement ladite coiffe, laquelle est agencée à cet effet, ainsi qu'un élément cylindrique central 29 de la colonne, le rayon de cet élément correspondant à la distance de la génératrice de l'hélicoïde dont chaque rampe a la forme à son axe, pour que la tête de ladite vis soit appliquée au sommet de la coiffe et que le corps de cette vis soit vissé dans le socle de la colonne. Le premier moyen de fixation comprend également optionnellement une rondelle 20b disposée entre la tête de la vis et le sommet de la coiffe. Ladite vis peut également être remplacée par une tige filetée et un écrou vissé sur cette tige en lieu et place de la tête de vis.

Alternativement, selon un autre mode de réalisation de l'invention non illustré, chaque rampe est à forme d'hélicoïde fermé de sorte qu'aucun élément cylindrique central au travers duquel peut passer une vis de fixation n'est présent. Dans ce cas, la coiffe de la colonne n'est pas agencée pour être traversée par une vis et peut être fixée à son socle par exemple au moyen de deux tiges fixées audit socle et disposées de part et d'autre de la colonne et parallèlement à celle-ci, sur lesquelles peut être enfilée au travers d'orifices prévus à cet effet à ses extrémités, une lame passant au dessus de la coiffe de la colonne et appliquée sur celle-ci par des écrous vissés au dessus des orifices de la lame sur l'extrémité filetée de chaque tige.

Quelque soit le moyen de fixation utilisé, la colonne peut être facilement détachée du bloc moteur et remplacée par une autre colonne pendant que la première est nettoyée, de sorte à limiter le temps d'interruption du fonctionnement du dispositif à celui de remplacement de la colonne, qui ainsi constitue un module de dépoussiérage interchangeable.

Dans chaque mode de réalisation illustré de l'invention, le dispositif comprend également un moyen d'alimentation 21 (figures 1 a, 1b et 2) ou 21a (figures 5a et 6) en un fluide de nettoyage de l'une au moins des conduite de convoyage et chambre d'aspiration et un moyen de raccordement 22 (figures 1a, 1b et 2) ou 22a (figures 5a et 6) à un dispositif de séchage desdites conduite et chambre par projection ou aspiration d'air, généralement chaud et sec, dans l'une au moins de ces dernières. Lesdits moyen d'alimentation en un fluide de nettoyage et de raccordement à un dispositif de séchage peuvent être communs comme dans les deux modes de réalisation illustré, ou séparés. Le fluide de nettoyage peut être évacué de la colonne par un moyen spécifique ou comme dans le mode de réalisation de l'invention illustré, par le conduit d'aspiration. Le fait de projeter un fluide de nettoyage dans la colonne, généralement de l'eau éventuellement additionnée de détergent, au travers de la conduite d'alimentation ou de la chambre d'aspiration, rend ce système de nettoyage particulièrement simple à mettre en oeuvre puisqu'il ne demande aucun sprinklers comme selon l'état de la technique et utilise au contraire une conduite qui est déjà prévue à une autre fin, à savoir le convoyage des comprimés ou gélules ou l'aspiration de la poussière de ces comprimés ou gélules, pour conduire ledit fluide dans la colonne. Le fait que le fluide de nettoyage traverse les conduite de convoyage et chambre d'aspiration et y est contenu permet aussi par simple réglage du débit de ce fluide, d'obtenir aisément un nettoyage parfait de toutes les zones de la colonne entrant au contact des comprimés ou gélules, ce qui n'est pas le cas avec un dispositif auto nettoyant selon l'état de la technique. Ceci permet également l'utilisation d'une quantité réduite de fluide de nettoyage comparativement à un tel dispositif. Les mêmes avantages se retrouvent au niveau du séchage du dispositif après nettoyage puisque ce séchage fonctionne selon le même principe que le nettoyage. Optionnellement, le dispositif de séchage de la colonne peut comprendre une source d'air comprimé et peut alors également être utilisé pour débarrasser la colonne des comprimés ou gélules qu'elle contiendrait encore, par projection d'air comprimé dans la conduite de convoyage, avant de procéder au nettoyage de cette colonne in situ ou de la détacher du bloc moteur pour un nettoyage extérieur au dispositif.

La fixation de la coiffe de la colonne à son socle par compression entre ces derniers de l'ensemble formé par les conduite de convoyage et chambre d'aspiration assure une excellente étanchéité de la colonne à la poussière de comprimés ou gélules traitées ainsi qu'au fluide de nettoyage de la colonne. La colonne peut être en outre complètement isolée du milieu ambiant en fermant par des moyens étanches (non représentés) les moyens d'alimentation et d'évacuation des comprimés ou gélules ainsi que le conduit d'aspiration et qu'elle comprend de même que le moyen d'alimentation en fluide de nettoyage et de raccordement à un dispositif de séchage. De la sorte, la colonne peut être détachée du bloc moteur sans aucun risque de dispersion de poudre de comprimés ou gélules ou de fluide de nettoyage dans le milieu ambiant.

Dans le second mode de réalisation illustré, le dispositif selon l'invention comprend une conduite centrale cylindrique 27 d'injection d'air dans la colonne, coaxiale à cette dernière et agencée entre un élément cylindrique central 29 de la colonne et chaque bordure intérieure de chaque rampe et un passage d'injection d'air étanche aux comprimés ou gélules est prévu entre ladite conduite centrale et la conduite de convoyage. De la sorte, il est possible d'injecter de l'air depuis le centre de la colonne vers sa périphérie, de sorte à aider la poussière des comprimés ou gélules qui y sont convoyés à en être évacuée par la chambre d'aspiration. Dans ce mode de réalisation, la conduite centrale exerce également la fonction de moyen d'alimentation en un fluide de nettoyage de conduite de convoyage et chambre d'aspiration et de moyen de raccordement à un dispositif de séchage de ces conduite et chambre.

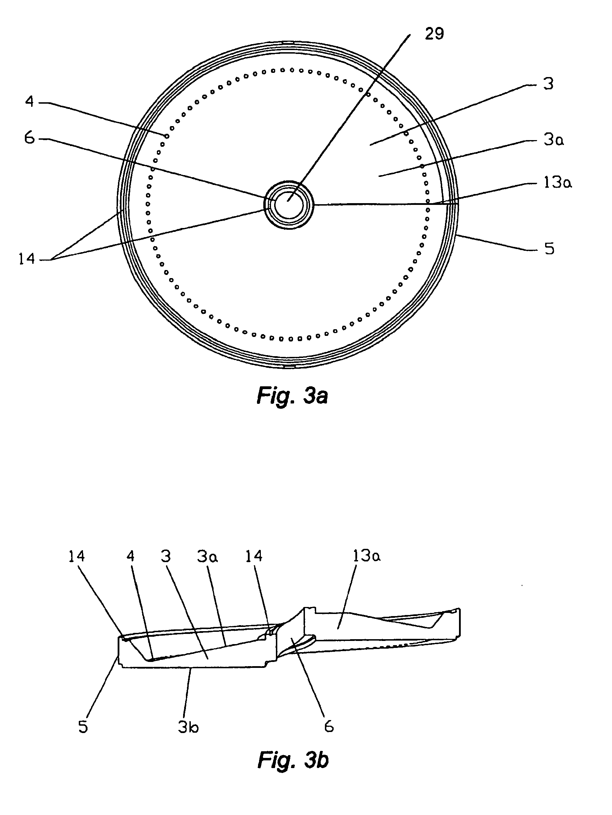

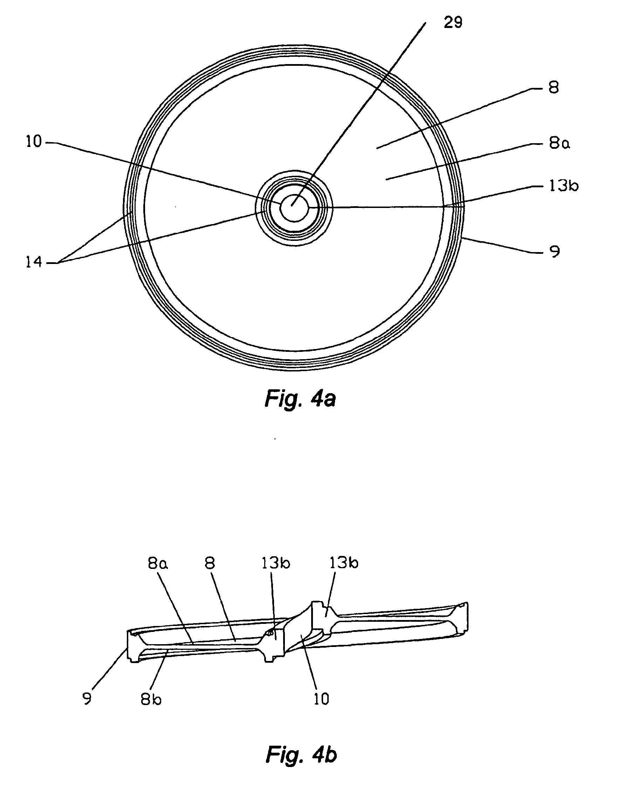

Dans le premier mode de réalisation de l'invention illustré, la rampe de convoyage et la rampe d'aspiration sont respectivement composées de sections 13a, 13b illustrées chacune respectivement par les figures 3a et 3b et par les figures 4a et 4b. Chaque section est de hauteur axiale sensiblement égale à la hauteur de translation de l'hélicoïde dont la rampe dont elle fait partie a la forme et est agencée pour être emboîtée à une section sous-jacente de l'autre rampe, deux sections successives de chaque rampe étant positionnées correctement pour un parfait emboîtement au moyen d'éléments de positionnement de formes complémentaires 23a, 23b dont est munie chaque section et coopérant l'un avec l'autre. Un moyen d'étanchéité 14 est prévu entre deux sections successives, disposé entre leurs bordures périphériques et intérieures respectives, par exemple constitué de joints en matériau résilient comme de type O-ring. Le moyen d'étanchéité peut également être inhérent au matériau utilisé pour la réalisation des sections de rampes si ce dernier offre des propriétés mécaniques telles qu'il assure l'étanchéité recherchée, comme par exemple un matériau en lui-même suffisamment résilient. Optionnellement, le profil de la base de chaque section de la rampe de convoyage est tel qu'une marche de quelques millimètres apparaît à la jonction de deux sections successives de cette rampe. Une telle configuration de la rampe exerce une fonction d'anti-retour des comprimés ou gélules qui sont convoyées dans la colonne du dispositif, ce qui est particulièrement approprié dans le cas ou ces derniers sont de petite taille et ont de ce fait tendance à refluer dans la colonne en sens inverse de celui du convoyage.

De même, dans chaque mode de réalisation de l'invention illustré, la colonne est composée de sections 13c de hauteur axiale sensiblement égale à la hauteur de translation de l'hélicoïde dont la première rampe de convoyage emprunte la forme, chaque section respective étant agencée pour être emboîtée à une section sous-jacente, deux sections successives de chaque rampe étant positionnées correctement pour un parfait emboîtement au moyen d'éléments de positionnement de formes complémentaires 23c, 23d dont est munie chaque section et coopérant l'un avec l'autre et l'étanchéité entre deux sections successives est assurés par un moyen d'étanchéité 14, disposé entre leurs bordures périphériques extérieures, par exemple constitué de joints en matériau résilient comme de type O-ring.

Un tel arrangement de la colonne en une pluralité de sections présente de nombreux avantages. Tout d'abord, il permet une fabrication plus aisée de cette colonne puisque chaque section peut être facilement usinée individuellement. Ensuite, la modularité apportée par un arrangement en sections empilables de la colonne permet d'adapter la hauteur de chaque colonne à la disposition des installations de fabrication et de conditionnement des comprimés ou gélules entre lesquelles un dispositif de dépoussiérage doit être placé. D'autre part, si nécessaire, la colonne peut être facilement désassemblée en ses sections, qui peuvent alors être très aisément nettoyées au moyen d'un simple lave-vaisselle. Dans une telle configuration, les différentes sections de la colonne peuvent être fixées de manière amovibles les unes aux autres, par exemple au moyen de clips (non représentés), de sorte à pouvoir détacher la colonne dans son ensemble de son bloc moteur et la remplacer par une colonne propre pendant que la première est nettoyée et conserver ainsi le caractère de module de dépoussiérage interchangeable de cette colonne, décrit plus haut.

Il est à noter enfin que dans ce second mode de réalisation de l'invention illustré, la coiffe de la colonne est en fait constituée d'un couvercle 25c et d'une section supérieure 25d de cette dernière, disposée sous ledit couvercle et au niveau de laquelle est prévu le moyen d'évacuation des comprimés ou gélules, une rampe de connexion 25e étant alors également prévue pour raccorder la portion de rampe de convoyage de ladite section supérieure au moyen d'évacuation. Dans ce mode de réalisation, le socle de la colonne comprend une base 18a et un élément similaire à une section inférieure de la colonne mais divisée en un anneau orientable 18b comprenant une section de la chambre d'évacuation, disposé de manière pivotante sur un élément 18c de la base de la rampe de convoyage. Dans ce cas, le moyen d'alimentation de la conduite de convoyage en comprimés ou gélules est prévu au niveau dudit anneau orientable, ce qui permet de disposer le moyen d'alimentation en question à sa guise sur la périphérie de la colonne.

L'invention n'est pas limitée aux deux formes de réalisation décrites ci-avant et illustrées mais s'étend à toute autre forme de réalisation couverte par les revendications qui suivent et que l'homme du métier pourra mettre en oeuvre. Par exemple, trois variantes du second mode de réalisation illustrée et décrite peuvent être envisagées Dans la première variante, la chambre d'aspiration périphérique à la conduite de convoyage est remplacée par une chambre d'aspiration constituée d'une conduite cylindrique centrale à la colonne, semblable à la conduite centrale d'injection d'air selon ledit second mode de réalisation. Dans ce cas un passage d'aspiration entre cette conduite et la conduite de convoyage est prévu au travers de la première bordure intérieure de la rampe de convoyage, sa première bordure périphérique formant alors elle-même une paroi de la conduite de convoyage étanche aux comprimés ou gélules ainsi qu'à leur poussière. Dans la deuxième variante, la chambre d'aspiration périphérique à la conduite de convoyage est remplacée par une chambre d'aspiration disposée sous la rampe de convoyage et l'aspiration des poussières de comprimés ou gélules est assurée depuis cette chambre d'aspiration inférieure de la colonne, au travers de perforations de la base de la rampe de convoyage. Dans la troisième variante, la chambre d'aspiration est délimitée par la première bordure périphérique de la rampe de convoyage et un cylindre monolithique coaxial à cette rampe et d'un diamètre supérieur à celui de ladite première bordure périphérique, ledit cylindre étant solidarisé à la rampe de convoyage par la coiffe et le socle de la colonne.

## Revendications

1. Dispositif de dépoussiérage de comprimés ou gélules pharmaceutiques comprenant une colonne (1) de dépoussiérage comprenant au moins une rampe, chaque rampe étant à forme d'hélicoïde réglé, une première rampe étant une rampe de convoyage (2) comprenant une première base (3) ayant une face antérieure (3a) et une face postérieure (3b), une première bordure périphérique (5) et une première bordure intérieure (6), ladite première rampe étant constitutive d'une conduite de convoyage (11) aux parois étanches aux comprimés ou gélules comportant une entrée en partie inférieure de la colonne et une sortie en partie supérieure de la colonne, cette colonne comprenant une chambre d'aspiration de poussières de comprimés ou gélules (12) aux parois étanches aux comprimés ou gélules convoyés, dont une première paroi est constituée d'une desdites première bordure périphérique ou intérieure ou de ladite première base de la rampe de convoyage et un passage d'aspiration (4, 4') de poussières de comprimés ou gélules étant prévu dans ladite première paroi entre la conduite de convoyage et la chambre d'aspiration, l'ensemble formé par la conduite de convoyage et la chambre d'aspiration étant agencé de sorte que la colonne soit étanche aux poussières de comprimés ou gélules; **caractérisé en ce que** la colonne est composée de sections (13c), chaque section de la colonne comprenant une section de chaque rampe de hauteur axiale sensiblement égale à la hauteur de translation dudit hélicoïde, chaque section respective d'une rampe étant agencée pour être emboîtée à une section sous-jacente d'une rampe.

2. Dispositif selon la revendication 1 , **caractérisé en ce que** ledit passage d'aspiration comprend des orifices (4) percés dans ladite première base.

3. Dispositif selon la revendication 1 ou 2, **caractérisé en ce que** les hauteurs respectives de la première bordure intérieure et de la première bordure périphérique correspondent sensiblement à la hauteur de translation de l'hélicoïde réglé de sorte que la conduite de convoyage est délimitée par ces bordures et par la face antérieure de la base de la rampe de convoyage et la face postérieure de cette base sous-jacente à ladite face antérieure et **en ce que** la chambre d'aspiration est délimitée par la première bordure périphérique et une bordure périphérique extérieure (9'), coaxiale à la première bordure périphérique et de hauteur correspondant sensiblement à la hauteur de translation de l'hélicoïde dont la première rampe de convoyage emprunte la forme, la bordure périphérique extérieure étant disposée du côté opposé à la première bordure périphérique relativement à la première bordure intérieure et connectée à la première bordure périphérique par des moyens de connexion (26).

4. Dispositif selon la revendication 3, **caractérisé en ce que** ledit passage d'aspiration comprend des orifices percés dans ladite première bordure périphérique.

5. Dispositif selon l'une quelconque des revendications précédentes, **caractérisé en ce que** ledit passage d'aspiration comprend une fente (4') disposée au droit de la première bordure périphérique.

6. Dispositif selon l'une des revendications 1 ou 2, **caractérisé en ce que** la colonne comprend une seconde rampe d'aspiration (7) à forme d'hélicoïde réglé dont le diamètre et la distance de la génératrice à l'axe, commun à celui de la première rampe, sont sensiblement égaux à ceux de la première rampe et agencée parallèlement à cette dernière sous celle-ci, de sorte à former avec elle une double hélice, ladite seconde rampe comprenant une seconde base (8) ayant une face antérieure (8a) et une face postérieure (8b), une seconde bordure périphérique (9) et une seconde bordure intérieure (10), et **en ce que** les hauteurs respectives des première et seconde bordures périphériques et des première et seconde bordures intérieures sont complémentaires, de sorte à délimiter entre la face antérieur de la base de la rampe de convoyage, la face postérieure de la base de la rampe d'aspiration et leurs bordures respectives ladite conduite (11) de convoyage comportant une entrée en partie inférieure de la colonne et une sortie en partie supérieure de la colonne et de sorte à délimiter entre la face antérieure de la base de la rampe d'aspiration, la face postérieure de la base de la rampe de convoyage et leurs bordures respectives ladite chambre (12) d'aspiration.

7. Dispositif selon la revendication 6, **caractérisé en ce que** la première rampe de convoyage et la seconde rampe d'aspiration sont respectivement composées de sections (13a, 13b) de hauteur axiale sensiblement égale à la hauteur de translation de l'hélicoïde dont la rampe considérée a la forme, chaque section respective d'une des rampes étant agencée pour être emboîtée à une section de l'autre rampe.

8. Dispositif selon l'une quelconque des revendications précédentes, **caractérisé en ce qu'**un moyen d'étanchéité (14) est disposé entre deux sections de rampe successives.

9. Dispositif selon l'une quelconque des revendications précédentes, **caractérisé en ce qu'**il comprend un moyen d'alimentation (15) de la conduite de convoyage de la colonne en comprimés ou gélules agencé à l'entrée de la conduite de convoyage, un moyen d'évacuation (16) des comprimés ou gélules convoyés agencé à la sortie de la conduite de convoyage, un conduit d'aspiration (17) de poussières connecté à la chambre d'aspiration et un bloc moteur (19) agencé pour animer la colonne d'un mouvement oscillant pour convoyer les comprimés ou gélules de l'entrée à la sortie de la conduite de convoyage.

10. Dispositif selon la revendication 9, **caractérisé en ce que** la colonne comprend une coiffe (25a, 25b; 25c, 25d, 25e) agencée pour être emboîtée de façon étanche sur l'ensemble fermé par les conduites de convoyage et d'aspiration, un socle (18; 18a, 18b, 18c) agencé pour être emboîté de façon étanche sous l'ensemble formé par les conduites de convoyage et d'aspiration et un premier moyen de fixation amovible (20a, 20b) de ladite coiffe audit socle agencé pour compresser entre eux les conduite de convoyage et chambre d'aspiration et **en ce qu'**il comprend un second moyen de fixation amovible de la colonne au bloc moteur.

11. Dispositif selon l'une quelconques des revendications 1 à 5 ou selon la revendication 7, **caractérisé en ce que** chaque rampe est a forme d'hélicoïde fermé.

12. Dispositif selon l'une quelconque des revendications précédentes, **caractérisé en ce qu'**il comprend un moyen d'alimentation (21 , 21 a) en un fluide de nettoyage de l'une au moins des conduites de convoyage et d'aspiration.

13. Dispositif selon la revendication 12, **caractérisé en ce qu'**il comprend un moyen de raccordement (22, 22a) à un dispositif de séchage desdites conduites par projection ou aspiration d'air dans l'une au moins de ces dernières.

14. Dispositif selon la revendication 13, **caractérisé en ce qu'**il comprend une conduite centrale (27) d'injection d'air dans la colonne, coaxiale à cette dernière et agencée entre un élément cylindrique central (29) de la colonne et chaque bordure intérieure de chaque rampe et **en ce qu'**un passage d'injection (28) d'air étanche aux comprimés ou gélules est prévu entre ladite conduite centrale et la conduite de convoyage.

15. Dispositif selon l'une quelconque des revendications précédentes, **caractérisé en ce que** la colonne est réalisée en un matériau synthétique.

## Claims

1. Device for removing dust from pharmaceutical tablets or capsules comprising a dust removal column (1) which comprises at least one ramp, each ramp having a shape of an ordered helicoid, a first ramp being a conveying ramp (2) comprising a first base (3) having a rear face (3a) and an front face (3b), a first peripheral edge (5) and a first internal edge (6), said first ramp being part of a conveying conduit (11) having walls being leaktight with respect to tablets or capsules and comprising an inlet at the lower part of the column and an outlet at the upper part of the column, said column comprising an aspiration chamber (12) for aspiration of dust from tablets or capsules and having walls that are leaktight with respect to tablets or capsules, a first of said walls being composed of one of said first peripheral edge or of said first internal edge or of said first base of the conveying ramp, a passage (4, 4') for aspiration of dust from tablets or capsules being provided in said first wall between the conveying conduit and the aspiration chamber, the assembly formed by said conveying conduit and said aspiration chamber being arranged so that that the column is leaktight with respect to dust from tablets or capsules, **characterised in that** the column is composed of sections (13c), each section of the column comprising a section of each ramp having an axial height which is substantially equal to the translation height of said helicoid, each section of a ramp being arranged to fit to an underlying section of a ramp.

2. Device according to claim 1, **characterised in that** said aspiration passage comprises openings (4) provided in said first base.

3. Device according to claim 1 or 2, **characterised in that** the respective heights of the first internal edge and of the first peripheral edge are substantially equal to the translation height of the ordered helicoid so that the conveying conduit is delimitated by these edges and by the rear face of the base of the conveying ramp and the front face of said base which underlies said rear face and **characterised in that** the aspiration chamber is delimitated by the first peripheral edge and an outer peripheral edge (9') which is coaxial with the first peripheral edge and which is of a height which is substantially equal to the translation height of said helicoid, the outer peripheral edge being arranged on the opposite side to the first peripheral edge relatively to the first internal edge and being connected to said first peripheral edge by connecting means (26).

4. Device according to claim 3, **characterised in that** said aspiration passage comprises openings arranged in said first peripheral edge.

5. Device according to any preceding claim, **characterised in that** said aspiration passage comprises a slit (4') arranged above said first peripheral edge.

6. Device according to claim 1 or 2, **characterised in that** the column comprises a second aspiration ramp (7) having a shape of an ordered helicoid, said helicoid having a diameter substantially equal to that of the helicoid of which said first conveying ramp has the shape and a distance from the line which generates said helicoid to its axis substantially equal to that of the helicoid of which said first conveying ramp has the shape, said first conveying ramp and said second aspiration ramp being coaxial, said second aspiration ramp being arranged parallelly and below said first conveying ramp so that together both ramp form a double helix, said second ramp comprising a second base (8) having a rear face (8a) and a front face (8b), a second peripheral edge (9) and a second internal edge (10), and **characterised in that** the heights of said first and said second peripheral edges and of said first and said second internal edges are complementary in order to delimitate said conveying conduit (11) between said rear face of said first base of said first conveying ramp, said front face of said second base of said second aspiration ramp, and the respective internal and peripheral edges of both ramps and in order to delimitate said aspiration chamber (12) between said rear face of said second base of said second aspiration ramp, said front face of said first base of said first conveying ramp and the respective internal and peripheral edges of both ramps.

7. Device according to claim 6, **characterised in that** the first conveying ramp and the second aspiration ramp are respectively composed of sections (13a, 13b), each section having an axial height substantially equal to the translation height of the helicoid of which the respective ramp has the shape, each respective section of one of the ramps being arranged to fit to a section of the other ramp.

8. Device according to any preceding claim, **characterised in that** a sealing means (14) is provided between two successive sections of ramp.

9. Device according to any preceding claim, **characterised in that** said device comprises a feeding means (15) for feeding tablets or capsules to said first conveying conduit, arranged at the inlet of the conveying conduit, a discharging means (16) of the conveyed tablets or capsules arranged at the outlet of the conveying conduit, a dust aspiration chamber (17) connected to the aspiration chamber and a motor bloc (19) arranged for transmitting an oscillating movement to the column in order to convey tablets or capsules from the inlet to the outlet of the conveying conduit.

10. Device according to claim 9, **characterised in that** the column comprises a cap (25a, 25b; 25c, 25d, 25e) arranged to be leaktightly fit to an assembly comprised of the conveying conduit and the aspiration chamber, a basement (18; 18a, 18b, 18c) arranged to be leaktightly fit under the assembly comprised of the conveying conduit and the aspiration chamber and a first removable fixing means (20a, 20b) for fixing said cap to said basement and arranged for compressing between them the conveying conduit and the aspiration chamber and **characterised in that** the device comprises a second removable fixing means for fixing the column to the motor bloc.

11. Device according to any of claims 1 to 5 or according to claim 7 , **characterised in that** each ramp has the shape of a closed helicoid.

12. Device according to any preceding claim, **characterised in that** the device comprises a cleaning fluid feeding means (21, 21 a) for feeding a cleaning fluid in at least one of the conveying conduit and aspiration chamber.

13. Device according to claim 12, **characterised in that** the device comprises a connecting means (22, 22a) to a drying device for drying said conduits by blowing or aspiring air into at least one of said conduits.

14. Device according to claim 13, **characterised in that** the device comprises a central conduit (27) for blowing air into the column, arranged coaxially with the column and being between a central cylindrical element (29) of the column and each internal edge of each said ramp and **characterised in that** an air blowing passage (28) which is leaktight with respect to tablets or capsules is arranged between said central conduit and the conveying conduit.

15. Device according to any preceding claim, **characterised in that** the column is made of a synthetic material.

## Patentansprüche

1. Vorrichtung zur Entfernung von Staub von pharmazeutische Tabletten oder Kapseln, die eine Kolonne (1) zur Entstaubung umfasst, die mindestens eine Rampe umfasst, wobei jede Rampe die Form einer Regelschraubenfläche aufweist, wobei eine erste Rampe eine Förderrampe (2) ist, die eine erste Basis (3) mit einer Vorderseite (3a) und einer Hinterseite (3b), einen ersten Umfangsrand (5) und einen ersten Innenrand (6) umfasst, wobei die erste Rampe aus einem Förderkanal (11) mit tabletten- oder kapseldichten Wänden zusammengesetzt ist, der einen Einlass im unteren Kolonnenteil und einen Auslass im oberen Kolonnenteil umfasst, wobei diese Kolonne eine Saugkammer für Stäube von Tabletten und Kapseln (12) mit Wänden umfasst, die für die geförderten Tabletten oder Kapseln dicht sind, von denen eine erste Wand von einem des ersten Umfangs- oder Innenrands oder einer der ersten Basis der Förderrampe gebildet wird und wobei ein Saugkanal (4, 4') für Stäube der Tabletten und Kapseln in der ersten Wand zwischen der Förderleitung und der Saugkammer vorgesehen ist und die von der Förderleitung und der Saugkammer gebildete Baugruppe so angeordnet ist, dass die Kolonne in Bezug auf Tabletten- und Kapselstäube dicht ist; **dadurch gekennzeichnet, dass** die Kolonne aus Sektionen (13c) zusammengesetzt ist, wobei jede Sektion der Kolonne eine Sektion von jeder Rampe mit einer Axialhöhe umfasst, die im Wesentlichen gleich der Translationshöhe der Schraubenfläche ist, wobei jede jeweilige Sektion einer Rampe angeordnet ist, um in eine darunter liegende Sektion einer Rampe eingepasst zu werden.

2. Vorrichtung nach Anspruch 1, **dadurch gekennzeichnet, dass** der Saugkanal Öffnungen (4) umfasst, die in die erste Basis gebohrt sind.

3. Vorrichtung nach Anspruch 1 oder 2, **dadurch gekennzeichnet, dass** die jeweiligen Höhen des ersten Innenrandes und des ersten Umfangsrandes im Wesentlichen mit der Translationshöhe der Regelschraubenfläche so übereinstimmen, dass die Förderleitung durch diese Ränder und durch die Vorderseite der Basis der Förderrampe und der Hinterseite dieser, unter der Vorderseite liegenden Basis begrenzt werden, und dass die Saugkammer durch den ersten Umfangsrand und einen Außenumfangsrand (9'), der zum ersten Umfangsrand koaxial ist und von einer Höhe, die im Wesentlichen mit der Höhe der Translation der Schraubenfläche übereinstimmt, von der die erste Förderrampe die Form annimmt, begrenzt werden, wobei der Außenumfangsrand auf der entgegengesetzten Seite des ersten Umfangsrandes, relativ zum ersten Innenrand angeordnet ist und an dem ersten Umfangsrand mit Verbindungsmitteln (26) angeschlossen ist.

4. Vorrichtung nach Anspruch 3, **dadurch gekennzeichnet, dass** der Saugkanal Öffnungen umfasst, die in den ersten Umfangsrand gebohrt sind.

5. Vorrichtung nach einem der vorangehenden Ansprüche, **dadurch gekennzeichnet, dass** der Saugkanal einen Schlitz (4') umfasst, der lotrecht zum ersten Umfangsrand angeordnet ist.

6. Vorrichtung nach einem der Ansprüche 1 oder 2, **dadurch gekennzeichnet, dass** die Kolonne eine zweite Saugrampe (7) in Form der Regelschraubenfläche aufweist, von der der Durchmesser und der Abstand der Erzeugenden zur Achse, die der der ersten Rampe gemeinsam ist, im Wesentlichen gleich denen der ersten Rampe sind, und parallel zu dieser unter ihr so angeordnet ist, dass sie mit ihr eine Doppelwendel bildet, wobei die zweite Rampe eine zweite Basis (8) mit einer Vorderseite (8a) und einer Hinterseite (8b), einen zweiten Umfangsrand (9) und einen zweiten Innenrand (10) umfasst, und dass die jeweiligen Höhen der ersten und zweiten Umfangsränder und der ersten und zweiten Innenränder sich so ergänzen, dass zwischen der Vorderseite der Basis der Förderrampe, der Hinterseite der Basis der Saugrampe und ihren jeweiligen Rändern der Förderkanal (11) abgegrenzt wird, der einen Einlass im unteren Kolonnenteil und einen Auslass im oberen Kolonnenteil aufweist und so angeordnet sind, dass er zwischen der Vorderseite der Basis der Saugrampe, der Hinterseite der Basis der Förderrampe und deren jeweiligen Rändern die Saugkammer (12) begrenzt.

7. Vorrichtung nach Anspruch 6, **dadurch gekennzeichnet, dass** die erste Förderrampe und die zweite Saugrampe jeweils zusammengesetzt sind aus Sektionen (13a, 13b) mit einer Axialhöhe, die im Wesentlichen gleich der Höhe der Translation der Schraubenfläche ist, von der die betrachtete Rampe die Form aufweist, wobei jede jeweilige Sektion einer der Rampen angeordnet ist, um in eine Sektion der anderen Rampe eingepasst zu werden.

8. Vorrichtung nach einem der vorangehenden Ansprüche, **dadurch gekennzeichnet, dass** ein Dichtheitsmittel (14) zwischen zwei aufeinander folgenden Rampensektionen angeordnet wird.

9. Vorrichtung nach einem der vorangehenden Ansprüche, **dadurch gekennzeichnet, dass** sie ein Versorgungsmittel (15) für die Förderleitung der Kolonne mit Tabletten oder Kapseln umfasst, das am Einlass der Förderleitung angeordnet ist, ein Entleerungsmittel (16) für die geförderten Tabletten oder Kapseln, das am Auslass der Förderleitung angeordnet ist, eine Saugleitung (17) für Stäube, die an die Saugkammer angeschlossen ist und einen Motorblock (19), der zum Anregen der Kolonne mit einer Schwingungsbewegung angeordnet ist, um die Tabletten oder Kapseln vom Einlass an den Auslass der Förderleitung zu fördern.

10. Vorrichtung nach Anspruch 9, **dadurch gekennzeichnet, dass** die Kolonne eine Haube (25a, 25b; 25c, 25d, 25e) umfasst, die angeordnet ist, um leckdicht über die von den Förder- und Saugleitungen gebildete Baugruppe eingepasst zu werden, einen Sockel (18; 18a, 18b, 18c), der angeordnet ist, um leckdicht unter der von den Förder- und Saugleitungen und eines ersten Befestigungsmittels gebildeten Baugruppe eingepasst zu werden, und ein erstes abnehmbares Befestigungsmittel (20a, 20b) der Haube an dem Sockel, das angeordnet ist, um zwischen ihnen die Förderleitung und die Saugkammer zusammenzudrücken, und dass sie ein zweites abnehmbares Befestigungsmittel der Kolonne am Motorblock umfasst.

11. Vorrichtung nach einem der Ansprüche 1 bis 5 oder nach Anspruch 7, **dadurch gekennzeichnet, dass** jede Rampe die Form einer geschlossenen Schraubenfläche aufweist.

12. Vorrichtung nach einem der vorangehenden Ansprüche, **dadurch gekennzeichnet, dass** sie ein Versorgungsmittel (21, 21 a) mit einer Reinigungsflüssigkeit von wenigstens einer der Förder- und Absaugleitungen umfasst.

13. Vorrichtung nach Anspruch 12, **dadurch gekennzeichnet, dass** es ein Anschlussmittel (22, 22a) an eine Trocknervorrichtung der Leitungen durch Spritzen oder Ansaugen von Luft in wenigstens einer von diesen umfasst.

14. Vorrichtung nach Anspruch 13, **dadurch gekennzeichnet, dass** sie eine zentrale Leitung (27) zur Lufteinblasung in die Kolonne umfasst, die zu dieser koaxial und zwischen einem zentralen zylindrischen Element (29) der Kolonne und jedem Innenrand von jeder Rampe angeordnet ist und dass ein tabletten- und kapseldichter Einblaskanal (28) für Luft zwischen der zentralen Leitung und der Förderleitung vorgesehen ist.

15. Vorrichtung nach einem der vorangehenden Ansprüche, **dadurch gekennzeichnet, dass** die Kolonne aus einem synthetischen Material hergestellt ist.
